# EUROPEAN PATENT SPECIFICATION

(11) **EP 2 307 694 B1**
(45) Date of publication and mention of the grant of the patent: **30.11.2011**
(21) Application number: 09742896.5
(22) Date of filing: 30.04.2009
(51) Int. Cl.: F02M 21/06, F17C 1/00, F17C 9/04

(54) **GAS SUPPLY SYSTEMS FOR GAS ENGINES**
GASVERSORGUNGSSYSTEME FÜR GASMOTOREN
SYSTÈMES DE DISTRIBUTION DE GAZ POUR MOTEURS À GAZ

(30) Priority: 08.05.2008 NO 20082158
(43) Date of publication of application: 13.04.2011
(73) Proprietor: Hamworthy Oil & Gas Systems AS, 1371 Asker (NO)
(72) Inventor: MELAAEN, Eirik, N-3400 Lier (NO)
(74) Representative: Rygh, Karl Egil Bjørn
(86) International application number: PCT/NO2009/000169
(87) International publication number: WO 2009/136793

(56) References cited:
- WO-A-94/17325
- WO-A-2005/058684
- WO-A-2007/117148
- FR-A- 2 722 760
- US-A- 3 864 918

## Description

The present invention relates to a gas supply system for engines such as dual-fuel or gas engines for vessels transporting liquefied gas as liquefied nature gas (LNG).

LNG-vessels have traditionally used steam-turbine propulsion but are now changing to slow speed-diesel, dual-fuel or gas propulsion machinery, see e.g. WO2005/058684 A1.

In the following a gas supply system being integrated with a boil-off gas (BOG) reliquefaction system is to be discussed. The new concept covers primarily a "stand alone" evaporator (evaporator) provided with an intermediate closed loop and in addition an integration of an evaporator (optimizer) into the BOG reliquefaction plant in order to utilize the cold duty in vaporized LNG to be feed into the engines for propulsion of the vessel. Utilization of the cold duty in the LNG will result in a reduction of the overall power consumption. If the BOG reliquefaction plant is stopped, the stand alone evaporator will feed the gas engines.

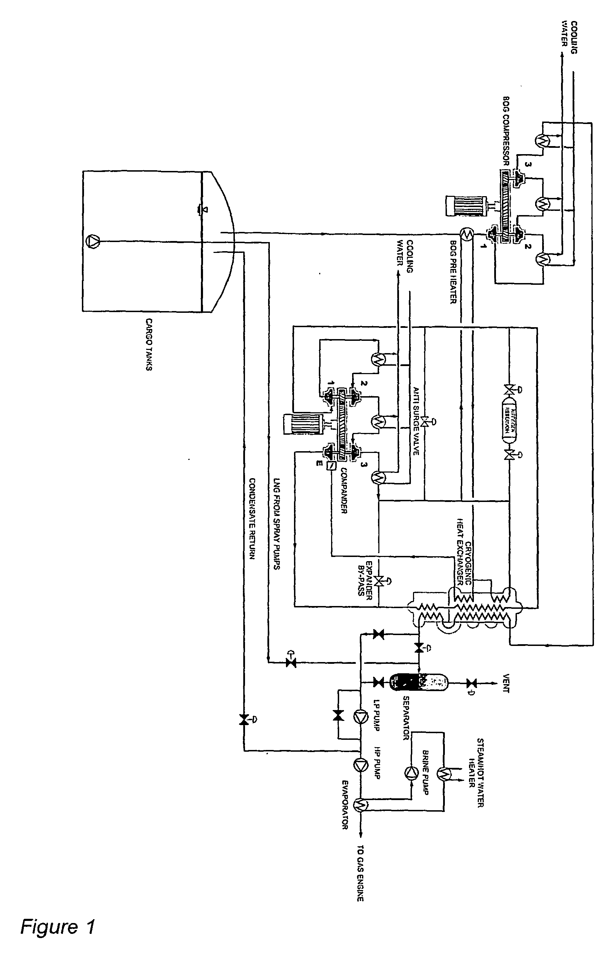

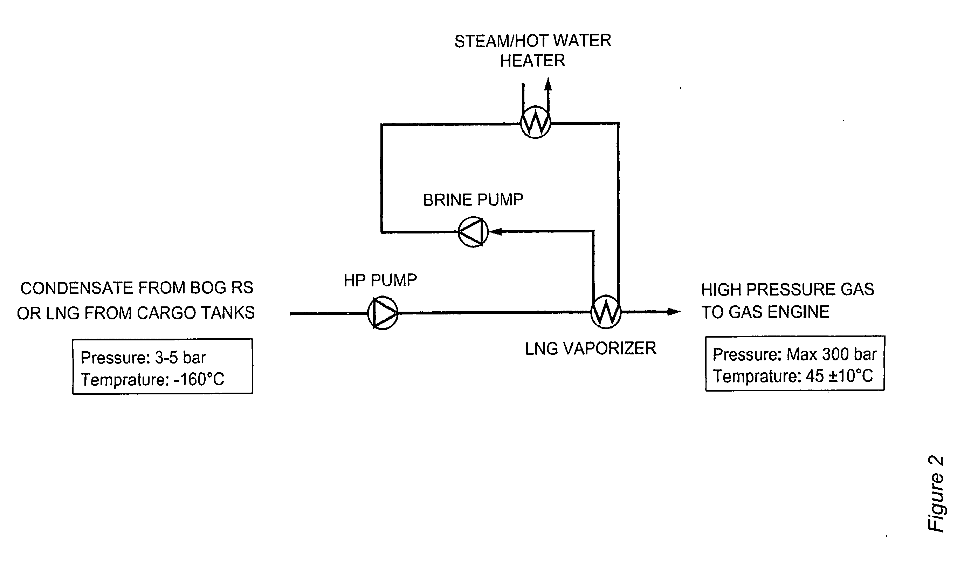

Condensate from the BOG reliquefaction plant or LNG from the cargo tanks being supplied with the cargo pumps is sent to at least one high pressure (HP) pump for feeding the evaporator. The LNG normally above the supercritical pressure is heated to "gas" in a heat exchanger. This heat exchanger is referred to as an evaporator or vaporizer, respectively; see e.g. figures 1 and 2. Thereafter, the high pressure gas is delivered to the propulsion engines or gas turbines, not shown in the drawings.

The discharge pressure of the high pressure pump is typically be up to 30 MPa (300 bar) at design case. The LNG temperature is typically from -140 to -150°C. LNG at high pressure is supercritical and it is not possible to distinguish between liquid and gas phase. Nevertheless, the heating of LNG to ambient temperature at high pressure is referred to as evaporation in this document.

The discharge pressure of the high pressure pump is typically 30 MPa (300 bar) at design case. The LNG temperature is typically from -140 to -150°C.

The system is based on an evaporation of LNG at high pressure with a heating source. In order not to use jacket water or steam from machine room directly in a heat exchanger with LNG, i.e. the present evaporator, a closed loop with intermediate medium is used to heat the LNG. The intermediate media could be a brine mixture, glycol mixture, hydrocarbon mixture or a refrigerant and is hereinafter referred to as "brine". As illustrated in figure 2, the closed loop comprises a LNG-vaporizer, i.e. the evaporator, a brine pump, and a heating source being denoted steam/hot water steamer in the drawings. This prevents the danger of getting LNG to machine room in case of internal leakage in the vaporizer. Another main reason for using an intermediate loop is that this is a more safe system due to the possibility of freezing.

The evaporator and its closed loop including can be installed in the Cargo Compressor Room (CCR) together with the BOG reliquefaction plant, in a separate location or in the engine room.

LNG at typically -160 °C and approximately 2-5 bar is pressurized in a cryogenic reciprocating pump (HP pump) to typically 300 bar. The LNG is then evaporated and heated to typically +45°C in a heat exchanger, i.e. the evaporator. If required a pulsation damper will be installed at the outlet of the pump and/or the evaporator, not illustrated in the drawings.

A typically configurations are two HP pump in parallel, each with 1x100% capacity, one in operation and one stand by, or 3 x 50%, two in operation and one in stand by.

In the evaporator LNG is heated with the brine. The brine is heated with hot water from the engine (jacket water), steam, e.g. machinery room, cooling water from process equipment in a steam/hot water heater. Depending on the intermediate media sea water can also be a heating source.

If the heating agent is steam, the brine enters the evaporator at typically 90°C and leaves at typically 30° C. If the heating agent is jacket water, the brine enters the heat exchanger at typically 75°C and leaves at atypically 30° C. If cooling water from the process equipments is used, the temperature level is lower.

After the evaporator the intermediate flow (brine) is pumped to a heat exchanger for heating to typically 90°C, alternatively 75°C. This heat exchanger where the brine is heated is the heat source referred to as "steam/hot water, heater" in the drawings.

There will typically be two brine pumps in parallel, each with 1x100% capacity, one in operation and one stand by.

Steam can be used as heating source for the evaporator and saturated steam is assumed. Steam condition depends on what is available on the LNG vessel. In the closed loop steam is condensing and sub-cooled in the heater for brine before it is returned to the boilers condensate/feed water tank.

As mentioned above, the main object of the present invention reduced overall power consumption. This object is achieved by a gas supply system for dual-fuel or gas engines integrated with a boil-off gas reliquefaction plant comprising a cryogenic heat exchanger, a boil-off gas compressor having a boil-off gas preheater, and a nitrogen loop with a compander, the gas being in the form of liquefied natural gas from cargo tanks or condensate from the reliquefaction plant. For utilizing in the reliquefation plant cold duty from gas to be combusted by the engines the system is provided with an evaporator (optimizer) extracting the cold duty and/or an evaporator being arranged in a closed loop comprising of at least one pump and a heating source for an intermediate medium used to optimize the cold duty extraction.

Thus, the evaporator (optimizer) is used to optimize the cold duty extraction. Although specifying a boil-off gas compressor having a preheater, the preheater can be replaced or supplemented by a precooler. The compander is understood to be a unit having compressor/expander unit, for instance.

If not already indicated above, favourable embodiments according to the present invention are understood from the dependent claims below.

The present invention is now to be discussed in more detail with reference to preferred embodiments illustrated in the drawings, in which:
Figure 1 shows a process description for a LNG reliquefation plant including a gas supply system for dual-fuel or gas engines, the gas supply system not being connected to the reliquefation plant;
Figure 2 illustrates the gas supply system in figure 1;
Figures 3 to 5 depict embodiments according to the present invention in which cold duty extracted in an evaporator (optimizer) is transferred into the reliquefation plant upstream a cryogenic heat exchanger, in parallel with a BOG preheater, or in parallel with the cryogenic heat exchanger, respectively; and
Figure 6 shows an embodiment minimizing the use of an external heating source for the HP LNG.

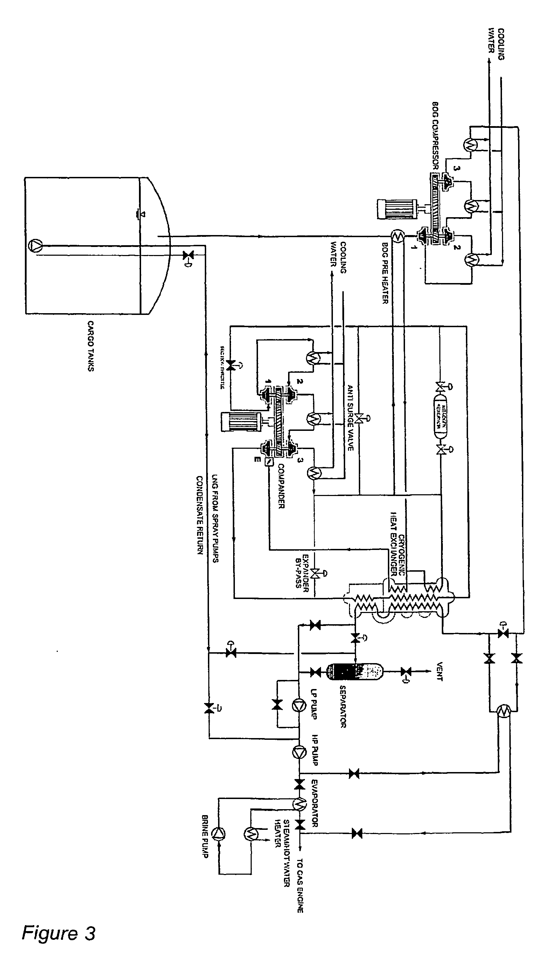

According to the present invention represented by figures 3 to 5 cold duty in a LNG evaporator is removed from the LNG during heating and evaporization thereof and is utilized in a BOG reliquefaction plant in order to reduce the overall power consumption. In other words the cold duty is taken out in the LNG evaporator (optimizer) and put into the BOG reliquefaction plant. The most efficient solution would have been to add an extra pass in a cryogenic heat exchanger, i.e. the cold box. Since the maximum design pressure for the state of the art cold boxes is limited, this solution is not cost efficient today. If BOG or nitrogen is precooled with LNG, less production of cooling duty for liquefying the BOG is required. This means that the compressor work will be reduced for operational modes where the optimizer is in operation.

The cold duty can be transferred into the BOG cycle upstream the cold box, in parallel with the cold box or integrated with the cold box or into the nitrogen cycle upstream or down stream the cold box, in parallel with the cold box or integrated with the cold box. The closed intermediate loop illustrated in figure 2 is hereinafter referred to as a "brine loop" and the LNG is evaporating in the "LNG evaporizer". The heat exchanger integrated with the BOG reliquefaction plant is referred to as an "optimizer". Typical solutions are shown in process flow diagrams; see figures 3 to 5 but the energy integrations are not limited to these figures. The LNG vaporizer and optimizer can be installed in parallel as shown in figure 3, or in series.

Figure 3 shows a process flow diagram where the BOG is precooled upstream the cold box. The LNG is vaporizing while the BOG is precooled. An alternative solution is to utilize the cold duty in parallel or integrated in the cold box on the BOG side.

The Boil-off gas is compressed in the BOG compressor and cooled in an aftercooler to ambient condition. The boil-off gas is further cooled upstream or in parallel with the cold box by heat exchanging with the compressed LNG. The compressed LNG is at cryogenic condition (typically -140 to 160C) and is heated up by the boil-off gas. The available cold duty in the LNG will therefore be utilized in the nitrogen loop. Utilizing of the cold duty results in reduced power consumption for the compander. The separator in the figures will operate as a suction drum for the pump. If required, a low pressure pump (LP pump) will be installed upstream the high pressure pump (HP-pump) in order to secure sufficient net positive suction head (NPSH) for the HP pump. The LP pump will function as a booster pump to the HP pump. The fuel gas system can be fed with both liquefied boil-off gas from the reliquefaction system and LNG from the cargo tanks.

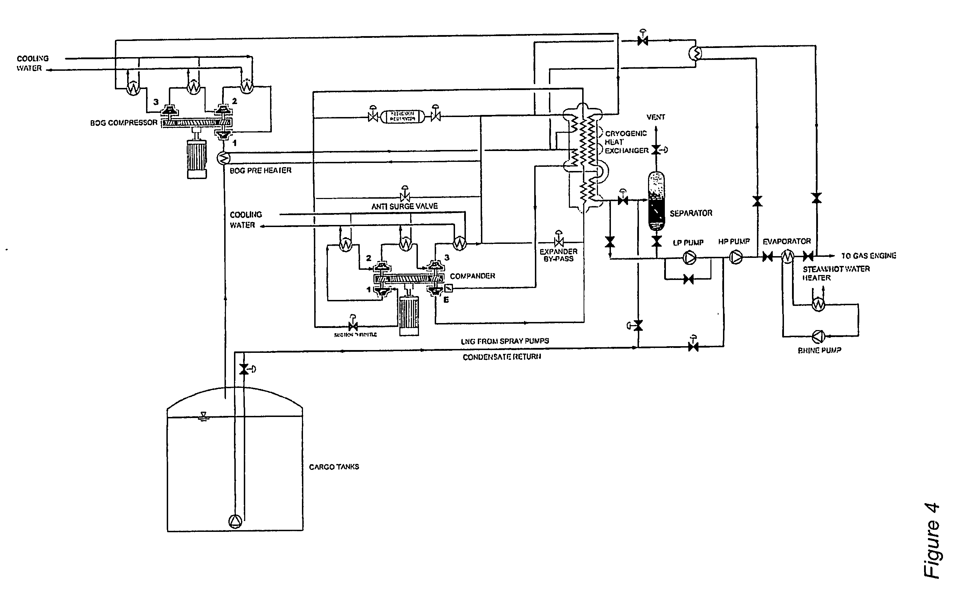

Figure 4 illustrates a process flow diagram where the optimizer is installed in parallel to the BOG preheater. This means that nitrogen at ambient condition is precooled while the LNG is evaporizing in the optimizer. Precooled nitrogen is mixed with the nitrogen flow from the BOG preheater, sent into the cold box and mixed with nitrogen cooled in the cold box. The nitrogen is further cooled in the cold box before it is expanded to almost compressor suction pressure in the expander. The precooled nitrogen can also be introduced into the cold box in a separate connection, precooled further in the cold box and expanded in the expander. Precooling of nitrogen by using high-pressure LNG will result in reduced power consumption for the system.

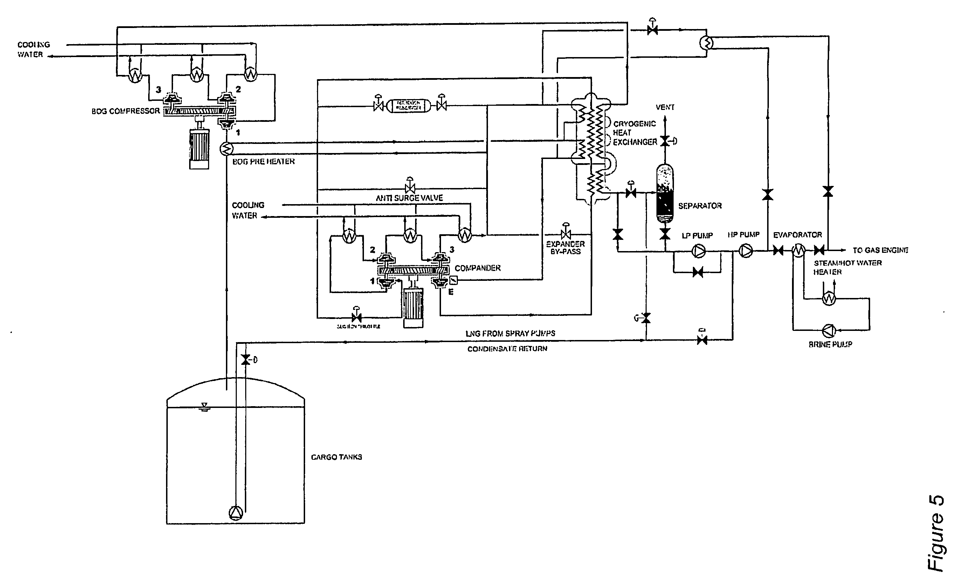

Figure 5 discloses a process flow diagram where the optimizer is in parallel with the cold box. This means that part of the nitrogen at ambient condition is cooled in heat exchanging with LNG in the optimizer. The nitrogen stream is cooled to the inlet expander temperature and mixed with the nitrogen from the cold box. The nitrogen is further expanded to almost compressor suction pressure in the expander.

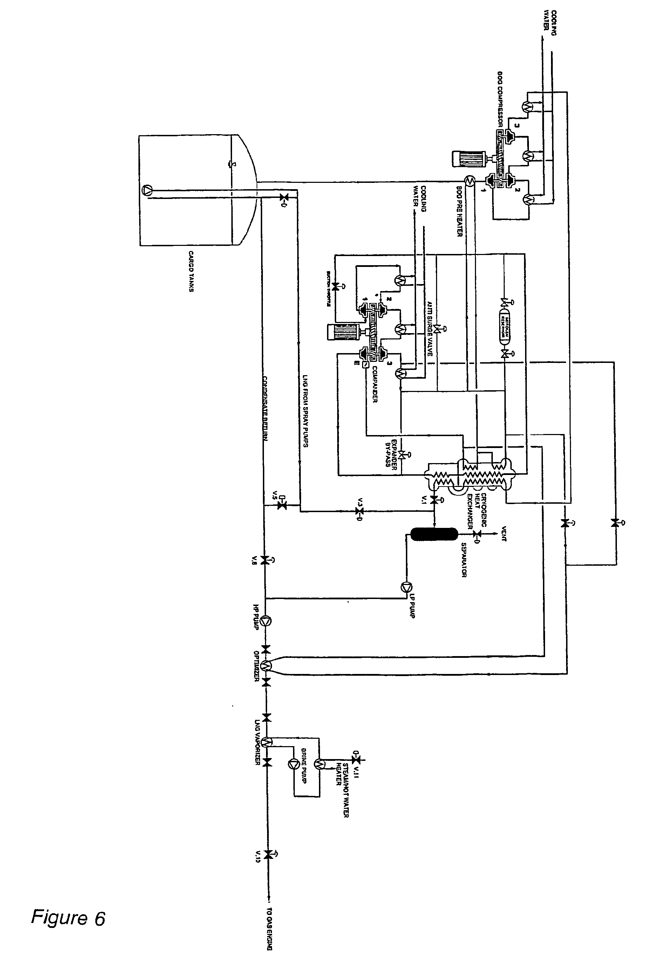

As shown in figure 6, instead of using an external heating source for warming the high pressure LNG to required temperature after the optimizer, warm nitrogen gas can be taken from one of the compressor stages upstream intercoolers or aftercooler. Then, warm nitrogen from the compressor stages is to be mixed with nitrogen from the aftercooler before entering the optimizer. Alternatively, nitrogen upstream one of the compressor stage coolers can be sent to a separate heat exchanger after the optimizer. The chilled nitrogen is returned downstream the cooler/heat exchanger unit where the Nitrogen is fetched.

The embodiment in figure 6 is minimizing the use of external heat in the steam/hot water heater as to reduce costs. If the heat gained from the nitrogen is insufficiently, more heat could be extracted ahead of the coolers. A typical situation exists when little BOG is available and the ship is using large quantities of fuel. During such conditions the reliquefaction system will operate at low capacity, while the fuel gas system being at its full capacity.

As already mentioned above, the optimizer can only be in operation when the BOG reliquefaction plant is working. If the reliquefaction plant is stopped, the stand alone evaporator will feed the gas engine without extracting any of the cold duty from the LNG passing theretrough. This means that the cold duty extracted by heating up the LNG is sent to the heating source (steam or hot water)

The gas supply system will typically be installed on a skid to simplify the installation. All components are assembled on a structural steel skid with all required interconnecting piping, valves, instruments and wiring.

A typical number of components for one skid are:
2 HP pumps; one in stand by,
1 LNG/brine heat exchanger (evaporator),
1 steam or jacket water/brine heat exchanger (brine heater),
2 brine circulation pumps; one in standby,
1 LNG heat exchanger integrated with the reliquefaction plant (optimizer).
Instrumentation,
control modules,
valves,
structural steel and interconnecting piping,
if required, additional equipment is LP-pumps and a suction drum.

## Claims

1. A gas supply system for dual-fuel or gas engines integrated with a boil-off gas reliquefaction plant comprising a cryogenic heat exchanger, a boil-off gas compressor having a boil-off gas preheater, and a nitrogen loop with a compander, the gas being in the form of liquefied natural gas from cargo tanks or condensate from the reliquefaction plant, **characterized in that** the system is provided with an evaporator (optimizer) extracting the cold duty from gas to be combusted by the engines, and the cold duty is utilized in the reliquefation plant.

2. A gas supply system according to claim 1, **characterized** i n that it further comprises an evaporator being arranged in a closed loop comprising of at least one pump and a heating source for an intermediate medium used to optimize the cold duty extraction.

3. A gas supply system according to claim 1, **characterized in that** the cold duty is transferred to the reliquefaction plant upstream the cryogenic heat exchanger.

4. A gas supply system according to claim 1, **characterized in that** the cold duty is transferred to the reliquefaction plant in parallel with the boil-off gas preheater.

5. A gas supply system according to claim 1, **characterized in that** the cold duty is transferred to the reliquefaction plant in parallel with the cryogenic heat exchanger or integrated into the cryogenic heat exchanger.

6. A gas supply system according to any of the proceeding claims, **characterized in that** the extracted cold duty is transferred to the reliquefaction plant using a heat exchanger arranged in a circuit connecting the optimizer to the reliquefaction plant.

7. A gas supply system according to claim 6, **characterized in that** the liquid gas is fed by means of a low pressure pump and high pressure pump.

8. A gas supply system according to any of the proceeding claims, **characterized in that** the heating source is steam, hot water or a steamer.

9. A gas supply system according to any of the proceeding claims, **characterized in that** the intermediate medium circulated in the closed loop by means of the pump(s) is a brine mixture, glycol mixture, hydrocarbon mixture or a refrigerant.

10. A gas supply system according to claim 9, **characterized in that** there is at least one pump in parallel, typically one in operation and one stand by.

11. A gas supply system according to any of the proceeding claims, **characterized in that** the gas is fed into the evaporator by means of at least one high pressure pump.

12. A gas supply system according to claim 9, **characterized in that** there is typically two pumps in parallel, one in operation and one stand by, or three pumps in parallel, two in operation and one stand by.

## Patentansprüche

1. Gasversorgungssystem für Zweistoff- oder Gasmotoren, integriert mit einer Boil-off-Gas-Rückverflüssigungsanlage umfassend einen kryogenen Wärmetauscher, einen Boil-off-Gaskompressor, der einen Boil-off-Gasvorheizer aufweist, und eine Stickstoffschleife mit einem Kompander, wobei das Gas in Form von verflüssigtem Erdgas von Ladetanks oder Kondensat von der Rückverflüssigungsanlage, **dadurch gekennzeichnet, dass** das System mit einem Verdampfer (Optimierer) versehen ist, der die Kühlleistung (cold duty) aus dem Gas zur Verbrennung durch die Motoren entnimmt, und die Kühlleistung in der Rückverflüssigungsanlage angewendet wird.

2. Gasversorgungssystem nach Anspruch 1, **dadurch gekennzeichnet, dass** es weiter einen Verdampfer umfasst, der in einer geschlossenen Schleife angeordnet ist, die mindestens eine Pumpe und eine Wärmequelle für ein Zwischenmedium, das zum Optimieren der Kühlleistungsentnahme angewendet wird, umfasst.

3. Gasversorgungssystem nach Anspruch 1, **dadurch gekennzeichnet, dass** die Kühlleistung zur Rückverflüssigungsanlage stromaufwärts des kryogenen Wärmetauschers überführt wird.

4. Gasversorgungssystem nach Anspruch 1, **dadurch gekennzeichnet, dass** die Kühlleistung zur Rückverflüssigungsanlage parallel zum Boil-off-Gasvorheizer überführt wird.

5. Gasversorgungssystem nach Anspruch 1, **dadurch gekennzeichnet, dass** die Kühlleistung zur Rückverflüssigungsanlage parallel zum kryogenen Wärmetauscher überführt wird oder in den kryogenen Wärmetauscher integriert wird.

6. Gasversorgungssystem nach irgendeinem der vorhergehenden Ansprüche, **dadurch gekennzeichnet, dass** die entnommene Kühlleistung zur Rückverflüssigungsanlage unter Anwendung eines Wärmetauschers in einem Kreislauf, der den Optimierer mit der Rückverflüssigungsanlage verbindet, überführt wird.

7. Gasversorgungssystem nach Anspruch 6, **dadurch gekennzeichnet, dass** das flüssige Gas durch eine Niederdruckpumpe und eine Hochdruckpumpe zugeführt wird.

8. Gasversorgungssystem nach irgendeinem der vorhergehenden Ansprüche, **dadurch gekennzeichnet, dass** die Wärmequelle Dampf, heißes Wasser oder ein Dampfer ist.

9. Gasversorgungssystem nach irgendeinem der vorhergehenden Ansprüche, **dadurch gekennzeichnet, dass** das Zwischenmedium, das mittels der Pumpe(n) in der geschlossenen Schleife zirkuliert wird, eine Salzmischung, eine Glycolmischung, eine Kohlenwasserstoffmischung oder ein Kühlmittel ist.

10. Gasversorgungssystem nach Anspruch 9, **dadurch gekennzeichnet, dass** es mindestens eine Pumpe in parallel gibt, typischerweise eine im Betrieb und eine im Bereitschaftsmodus.

11. Gasversorgungssystem nach irgendeinem der vorhergehenden Ansprüche, **dadurch gekennzeichnet, dass** das Gas dem Verdampfer mittels mindestens einer Hochdruckpumpe zugeführt wird.

12. Gasversorgungssystem nach Anspruch 9, **dadurch gekennzeichnet, dass** es typischerweise zwei Pumpen in parallel gibt, eine im Betrieb und eine im Bereitschaftsmodus, oder drei Pumpen in parallel, zwei im Betrieb und eine im Bereitschaftsmodus.

## Revendications

1. Système de distribution de gaz pour les moteurs dual-fuel ou à gaz intégrés avec une unité de reliquéfaction de gaz d'évaporation comprenant un échangeur de chaleur cryogénique, un compresseur de gaz d'évaporation ayant un préchauffeur de gaz d'évaporation, et une boucle d'azote avec un compandeur, le gaz étant dans la forme de gaz naturel liquéfié des citernes à cargaison ou de condensat provenant de l'unité de reliquéfaction, **caractérisé en ce que** le système est pourvu d'un évaporateur (optimiseur) extrayant la tenue au froid (cold duty) du gaz pour la combustion par les moteurs, et la tenue au froid est utilisée dans l'unité de reliquéfaction.

2. Système de distribution de gaz selon la revendication 1, **caractérisé en ce qu'**il comprend en outre un évaporateur étant disposé dans une boucle fermée comprenant au moins une pompe et une source de chauffage pour un milieu intermédiaire utilisé pour optimiser l'extraction de la tenue au froid.

3. Système de distribution de gaz selon la revendication 1, **caractérisé en ce que** la tenue au froid est transférée à l'unité de reliquéfaction arrangée en amont de l'échangeur de chaleur cryogénique.

4. Système de distribution de gaz selon la revendication 1, **caractérisé en ce que** la tenue au froid est transférée à l'unité de reliquéfaction arrangée en parallèle avec le préchauffeur de gaz d'évaporation

5. Système de distribution de gaz selon la revendication 1, **caractérisé en ce que** la tenue au froid est transférée à l'unité de reliquéfaction arrangée en parallèle avec l'échangeur de chaleur cryogénique ou incorporée dans l'échangeur de chaleur cryogénique.

6. Système de distribution de gaz selon l'une quelconque des revendications précédentes, **caractérisé en ce que** la tenue au froid extraite est transférée à l'unité de reliquéfaction utilisant un échangeur de chaleur disposé dans un circuit reliant l'optimiseur à l'unité de reliquéfaction.

7. Système de distribution de gaz selon la revendication 6, **caractérisé en ce que** le gaz liquide est alimenté au moyen d'une pompe à basse pression et d'une pompe à haute pression.

8. Système de distribution de gaz selon l'une des revendications précédentes, **caractérisé en ce que** la source de chauffage est la vapeur, l'eau chaude ou un vaporisateur.

9. Système de distribution de gaz selon l'une des revendications précédentes, **caractérisé en ce que** le milieu intermédiaire circulé dans la boucle fermée au moyen de la pompe ou des pompes est un mélange de saumure, un mélange de glycol, un mélange d'hydrocarbures ou un agent frigorigène.

10. Système de distribution de gaz selon la revendication 9, **caractérisé en ce qu'**il y a au moins une pompe en parallèle, dont typiquement l'une en fonctionnement et l'une en attente.

11. Système de distribution de gaz selon l'une des revendications précédentes, **caractérisé en ce que** le gaz est introduit dans l'évaporateur au moyen d'au moins une pompe à haute pression.

12. Système de distribution de gaz selon la revendication 9, **caractérisé en ce qu'**il y a typiquement deux pompes en parallèle, dont l'une en fonctionnement et l'une en attente, ou trois pompes en parallèle, dont deux en fonctionnement et une en attente.
